# EUROPÄISCHE PATENTSCHRIFT

(11) **EP 2 403 682 B1**
(45) Veröffentlichungstag und Bekanntmachung des Hinweises auf die Patenterteilung: **01.01.2014**
(21) Anmeldenummer: 10710191.7
(22) Anmeldetag: 05.03.2010
(51) Int. Cl.: B23Q 11/10

(54) **SPINDEL MIT EINER LANZENEINHEIT**
SPINDLE COMPRISING A LANCE
BROCHE ÉQUIPÉE DE UNITÉ DE LANCE

(30) Priorität: 05.03.2009 DE 102009011336
(43) Veröffentlichungstag der Anmeldung: 11.01.2012
(73) Patentinhaber: Bielomatik Leuze GmbH & Co. Kg, 72639 Neuffen (DE)
(72) Erfinder: HAAS, Reiner, 72555 Metzingen (DE); KEPLER, Jürgen, 72793 Pfullingen (DE)
(74) Vertreter: Ostertag, Reinhard
(86) Internationale Anmeldenummer: PCT/EP2010/001379
(87) Internationale Veröffentlichungsnummer: WO 2010/099972

(56) Entgegenhaltungen:
- EP-A1- 1 375 063
- WO-A1-02/064310
- WO-A1-03/106104

## Beschreibung

Die Erfindung betrifft Spindel mit einer Lanzeneinheit.

Die EP 1 375 063 A1 offenbart eine Spindel für eine Werkzeugmaschine, in welche ein Ölnebelgenerator integriert ist. Einer vernebelungsdüse wird Öl über ein radial innenliegendes Ölzuführrohr zugeführt. Zum Vernebeln benötigte Druckluft wird über ein äußeres koaxiales Druckluftzuführrohr zugeführt. Das Ölzuführrohr und das Luftzuführrohr sind beide in Drehrichtung feststehend, und beim freien Ende des Luftzuführrohres ist ein Kugellager vorgesehen, um dessen Ende radial gegen eine innere Kanalwand der Spindel abzustützen.

Es sind ferner Zweikanal-Minimalmengenschmierungen bekannt, bei welchen in der Nähe der Eingriffsstelle zwischen einem Werkzeug wie einem Bohrer und einem Werkstück ein Gemisch aus Luft und Schmiermittel erzeugt wird, welches einen sehr niedrigen Schmiermittelanteil enthält. Eine derartige MMS ist z. B. der DE 196 55 334 B4 zu entnehmen.

Bei dieser bekannten MMS läuft die Lanzeneinheit mit der Spindel um, was eine hochpräzise und teure Drehkupplung beim hinteren Ende der Lanzeneinheit notwendig macht, da Spindeln in modernen Bearbeitungzentren mit bis zu 20 000 Upm umlaufen und Fluids mit Drücken von 8 und mehr Bar handzuhaben sind.

Durch die vorliegende Erfindung soll daher eine Lanzeneinheit gemäß dem Oberbegriff des Anspruches 1 so weitergebildet werden, dass eine aufwändige Drehkupplung beim hinteren Lanzenende entfallen kann.

Diese Aufgabe ist erfindungsgemäß gelöst durch eine eine Spindel mit den in dem unabhängigen Anspruch angegebenen Merkmalen.

Für die Erfindung charakteristisch sind die Merkmalsgruppen entsprechend den Ansprüchen.

Bei der erfindungsgemäßen Spindel ist das das flüssige Schmiermittel führende Flüssigkeitsrohr drehfest mit dem Basisteil verbunden. Das freie Ende des Flüssigkeitsrohres bildet zusammen mit den benachbarten umlaufenden Teilen der Spindel selbst eine Art Drehkupplung, die aber nicht sehr passgenau bearbeitet zu werden braucht, da man eine gute fluidische Abdichtung durch den Gasstrom erhält, der unter Betriebsbedingungen über die Außenseite des Flüssigkeitsrohres achsparallel strömt. Auch sind die vom Ende des Flüssigkeitsrohres abgegebenen Schmiermittelmengen so klein, dass hier eine druckfeste Flüssigkeits-Abdichtung nicht notwendig ist. Die entsprechenden kleinen Flüssigkeitsvolumina werden von dem das Lanzenende umspülenden Luftstrom weggetragen, wie sie vom Ende des Flüssigkeitsrohres abgegeben werden.

Trotzdem ist bei der erfindungsgemäßen Spindel auch bei großer Länge sichergestellt, dass die Lanzeneinheit in der Spindel den mechanischen Belastungen, denen sie dort im Betrieb ausgesetzt ist, insbesondere den Querbeschleunigungen, die beim Verfahren der Spindel von einer Arbeitsstelle zur anderen auftreten, gut standhalten kann.

Die erfindungsgemäß vorgesehenen Drehlager dienen dazu, das Flüssigkeitsrohr, welches auf Platzgründen oder Materialgründen nicht absolut starr gebaut werden kann, an vorgegebenen Stellen radial abzustützen und so Durchbiegungen des Flüssigkeitsrohres zu vermeiden, die zu unerwünschten Kontakten mit einem umlaufenden Teil der Spindel führen könnten, die wegen der hohen Spindeldrehzahlen rasch zu einer Beschädigung des Flüssigkeitsrohres führen können.

Dieses Abstützen erfolgt entweder direkt an einer Spindelbohrung oder einer Bohrung eines mit der Spindel verbundenen Teiles wie einer Spannzangen-Betätigungsstange. Diese Bohrungen sollen nachstehend zusammen unter Lagerbohrung verstanden werden, also eine Bohrung an der das Flüssigkeits-Förderrohr der Lanzeneinheit transversal abgestützt wird.

Vorteilhafte Weiterbildungen der Erfindung sind in Unteransprüchen angegeben.

Bei nicht zu langen Flüssigkeitsrohren und guter Starrheit der Flüssigkeitsrohre ist es oft ausreichend, das Flüssigkeitsrohr an einer einzigen vom Rohrfuß beabstandeten Stelle zu lagern.

Bei längeren Flüssigkeitsrohren kann man auf eine zuweilen aus Raumgründen nicht mögliche Vergrößerung der Wandstärke des Flüssigkeitsrohres verzichten, wenn man eine Mehrzahl beabstandeter Drehlager vorsieht. Die Orte der Drehlager werden grob gesprochen so gewählt, dass sie bei den Orten liegen, bei denen die betriebsbedingten Auslenkungen von der Spindelachse am größten sind. Typischerweise sind dies Bereiche, die bei Auslenkungs- oder Schwingungsbäuchen liegen.

Eine Weiterbildung der Erfindung gestattet es, die Drehlager in vorgegebenem Abstand voneinander vorzusehen, Drehlager und Flüssigkeitsrohr aber als eine vormontierte Einheit in die Spindel einzubauen. Es ist somit auch keine Anschlagschulter oder dgl. auf der die Lanzeneinheit aufnehmenden Lagerbohrung vorzusehen. Ein weiterer Vorteil ist der, dass man zwischen den Drehlagern und entweder der Lagerbohrung oder der Außenfläche des Flüssigkeitsrohres axiale Relativbewegungen zulassen kann, wie sie benötigt werden, wenn die Lanzeneinheit im Inneren einer hohlen Spannstange angeordnet ist, die in vielen Spindeln vorgesehen ist, um eine Spannzange zu betätigen, über welche die Werkzeuge tragende Werkzeugträger lösbar mit der Spindel verspannbar sind.

Bevorzugte Orte, bei denen Drehlager vorgesehen sind, entsprechen Schwingungsbäuchen.

Bei Weiterbildung ist die gesamte Anordnung aus Flüssigkeitsrohr und Drehlagern in einer Patrone vormontiert, die einfach in einer Lagerbohrung montiert werden kann. Das Vorsehen einer derartigen fertigen Untereinheit ist deshalb von besonderem Interesse, da die Lanzeneinheit in radialer Richtung sehr kompakt bauen und eine feinmechanische Präzisionseinheit darstellen, die Fachleuten vorbehalten bleibt.

Es gibt verschiedene Möglichkeiten, wie man ein Drehlager konkret ausbilden kann. Dabei erfolgt im Einzelnen die Auswahl danach, wie groß das Lager in radialer Richtung baut, welche Drehzahlen das Lager aushält, in welchem Umfang das Drehlager von Luft durchströmt werden kann, und welche radialen Kräfte das Drehlager aufnehmen muss.

Besonders bevorzugt sind dabei Gleitlager, die sich durch hohe Drehzahlfestigkeit und besonders geringe Reibung bei mechanisch einfachem Aufbau auszeichnen. Auch können solche Lager gut so ausgebildet werden, dass sie in axialer Richtung von Luft durchströmt werden kann.

Gleitschichten, zeichnen sich zwar durch gute Gleiteigenschaften aus, sind aber oft spröde und lassen sich oft auch nicht in situ an einem Flüssigkeitsrohr erzeugen. Eine weiterbildung ermöglicht es, entsprechende Lagerhülsen als separate Teile herzustellen, die dann mit fertiger Gleitschicht auf das Flüssigkeitsrohr aufgesetzt werden.

Die Weiterbildung der Erfindung ermöglicht es, den Ringraum, der zwischen der Außenfläche des Flüssigkeitsrohres und der.Innenfläche einer die Lanzeneinheit aufnehmenden Lagerbohrung verbleibt, zum Transport von Gas zu verwenden, welches dazu dient, das Schmiermittel in kleinen Portionen zur Eingriffstelle zwischen Werkzeugschneide und Material des Werkstückes zu fördern.

Dabei ermöglicht es eine Weiterbildung der Erfindung den Drall zu vermindern, welcher den durch die Lager strömenden Gase durch die Durchgänge der Drehlager erteilt wird.

Die weiterbildung der Erfindung ist im Hinblick darauf von Vorteil, dass die radialen Stützkräfte, welche an verschiedenen Stellen des Flüssigkeitsrohres benötigt werden, unterschiedlich sind. Wenn ein Lager aber bei gleichem Einbauraum nur geringere Stützkraft zu erbringen braucht, kann es im Hinblick auf andere Parameter optimiert werden, z. B. Lebensdauer oder Durchlässigkeit für Luft.

Eine Weiterbildung der Erfindung ermöglicht es, die gesamte Lanzeneinheit in axialer Richtung um eine kleine Strecke zu verschieben. Damit kann die gesamte Lanzeneinheit der Verstellbewegung einer Spannstange folgen, welche dazu verwendet wird, eine im Spindelende angeordnete Werkzeugträger-Spannzange zu betätigen. Man braucht also keine axiale Relativbeweglichkeit zwischen dem Außenring der Drehlager und der Aufnahmebohrung der Spindel für die Lanzeneinheit vorzusehen.

Bei einer Weiterbildung der Lanzeneinheit ist auch das Gasrohr, welches das die kleinen Flüssigkeitsvolumina zur Arbeitsstelle tragende Gas bereitstellt, in Drehrichtung feststehend. Auch kann das Gasrohr schon in der Fabrik genauso wie das Flüssigkeitsrohr mit dem Basisteil verbunden werden. Die Lanzeneinheit umfasst somit die gesamte Flüssigkeitszufuhr und Gaszufuhr der Minimalmengenschmierung.

Bei einer Weiterbildung der Lanzneinheit sind das Luftrohr und das Flüssigkeitsrohr über ein oder mehrere luftdurchlässige Distanzteile mechanisch mit einander verbunden und bilden somit eine sehr belastungsfähige steife Schalenkonstruktion.

Dabei erhält man dann die gleichen Vorteile der Verwendbareit in einer Spindel mit Spannstange zur Betätigung einer Spannzange, wie sie oben schon dargelegt wurden.

Bei einer Weiterbildung der Lanzeneinheit kann sich das Flüssigkeitsrohr an den Lagerstellen etwas verkippen. Damit werden lokale hohe Biegemomente vermieden, die sonst an den Lagerstellen auf die Wand des Flüssigkeitsrohres einwirken. Solche Belastungen könnten im Dauerbetrieb zu Ermüdungsbrüchen führen.

Mit einer der Weiterbildung der Erfindung wird erreicht, dass das mit dem Verbindungsteil versehene Drehlager unter Federkraft gegenüber einer es aufnehmenden Lagerbohrung verlagerbar ist, gegenüber der Achse dieser Lagerbohrung verkippbar ist und in axialer Richtung längs der Lagerbohrung verschiebbar ist.

Diese Vorteile werden auf eine Art und weise erhalten, bei welcher der freie Querschnitt der die Lageranordnung aufnehmenden Bohrung im zwischen den Lagern liegenden Bereich nicht nennenswert beeinträchtigt wird.

Eine Weiterbildung der Erfindung ist im Hinblick auf gute axiale Verschiebbarkeit des Drehlagers bezüglich der Lagerbohrung von Vorteil, wobei gleichzeitig eine gute Drehmomentübertragung durch das Verbindungsteil zur Lagerbohrung erhalten wird.

Eine Weiterbildung der Erfindung ist im Hinblick auf die Symmetrie der Lagerstelle von Vorteil. Hat man zwei enger benachbarte Drehlager, so ist dies auch im Hinblick auf die Ausfallsicherheit von Vorteil, da bei Verschleiß oder Ausfall eines der Lager das andere Lager seine Funktion übernehmen kann.

Bei einer Weiterbildung der Erfindung ist gewährleistet, dass die verschiedenen Drehlager auch im Langzeitbetrieb mit niederer Reibung arbeiten und nur geringen Verschleiss zeigen.

Bei einer Weiterbildung der Spindel wird das Gas, welches kleine Schmiermitteltröpfchen zur Arbeitsstelle fördert, durch die Spindel selbst geleitet. Hierdurch erhält man zum einen eine zusätzliche Kühlung der Spindel, zum anderen hat man in der Spindelbohrung, welche die Lanzeneinheit aufnimmt, etwas mehr Platz. Dies ermöglicht es z. B. die Spannstange, die zum Betätigen der Spannzange dient, etwas dickwandiger auszuführen, so dass die Spannzange mit sehr großen Betätigungskräften bedient werden kann und trotzdem hohe Standzeit aufweist.

Mit einer Weiterbildung der Erfindung wird erreicht, dass die zum Vorsehen des Gaskanales notwendige Bearbeitung der Spindel besonders einfach ist.

Eine Alternative findet dann vorzugsweise Verwendung, wenn die Spindelbohrung an sich genügend Raum für den Transport des Gases bereitstellt und nur bei den Drehlagern aufgrund nicht vorhandener oder beschränkter Gasdurchlässigkeit der letzteren ein Bypass vorgesehen werden muss. Dieser lässt sich dann einfach durch Einfräsen von nach innen offenen Nuten in die Innenwand der Spindelbohrung realisieren. Der äußere Laufring der Drehlager wird dann von den innenliegenden Endflächen der zwischen den Nuten verbleibenden Rippen festgelegt.

Eine Weiterbildung der Erfindung ermöglicht es, die Betätigung der Werkzeugträger-Spannzange und das Zuführen von Schmiermittel und Gas kompakt im Inneren der Spindel unterzubringen.

Mit einer Weiterbildung der Erfindung wird errreicht, dass man eine Strömungsverbindung zwischen dem Lumen der Spannstange und deren Außenraum herstellen kann, welche insgesamt einen guten Durchtrittsquerschnitt hat, das tragende Material der axial belasteten Spannstange aber in Umfangsrichtung weitgehend erhält.

Nachstehend wird die Erfindung anhand von Ausführungsbeispielen unter Bezugnahme auf die Zeichnung näher erläutert. In dieser zeigen:
- Figur 1: einen Axialschnitt durch die Spindel einer Werkzeugmaschine mit eingesetzter MMS-Lanzeneinheit;
- Figur 2: eine vergrößerte Darstellung des Endabschnittes der Spindel nach Figur 1 sowie eines Zwischenabschnittes der Spindel;
- Figur 3: einen axialen Schnitt durch ein Basisteil der Lanzeneinheit;

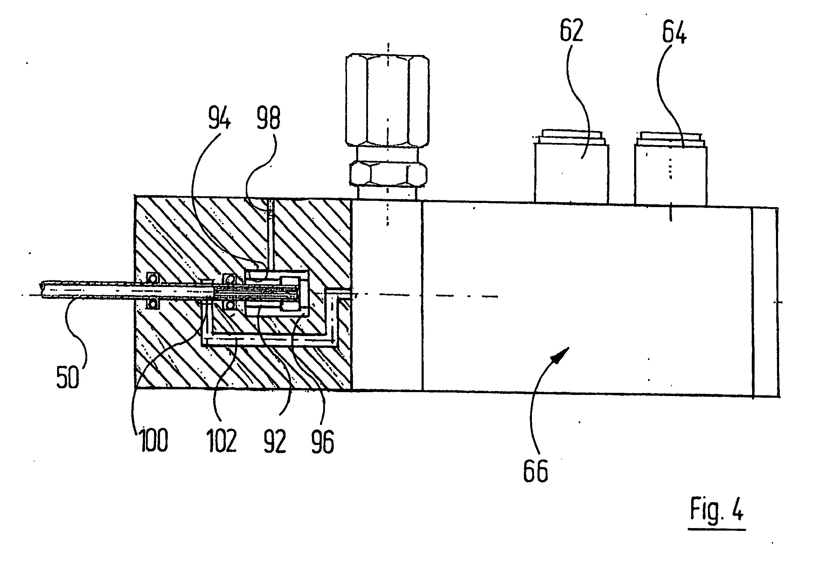

- Figur 4: eine ähnliche Schnittansicht wie Figur 2, wobei jedoch andere Drehlager verwendet sind, um ein Flüssigkeitsrohr an einer hohlen Spannstange der Spindel abzustützen;
- Figur 5: einen schematischen Längsschnitt durch eine abgewandelte Spindel, bei welcher sowohl ein Flüssigkeitsrohr als auch ein Gasrohr feststehend von einem Basisteil einer Lanzeneinheit getragen sind;
- Figur 6: eine Aufsicht und einen axialen Schnitt durch ein luftdurchlässiges Gleitlager, welches als Drehlager zur Abstützung eines Flüssigkeitsrohres einer Lanzeneinheit verwendbar ist;
- Figur 7: eine ähnliche Ansicht wie Figur 6, wobei ein permanentmagnetisches Drehlager verwendet ist;
- Figur 8: eine ähnliche Ansicht wie Figur 6, wobei als Drehlager ein Druckluft-beaufschlagtes dynamisches Lager verwendet ist;
- Figur 9: eine ähnliche Ansicht wie Figur 8, wobei jedoch ein abgewandeltes statisches Fluidlager gezeigt ist;
- Figur 10: eine ähnliche Ansicht wie Figur 6, wobei ein Kugellager als Drehlager verwendet ist;
- Figur 11: einen axialen Schnitt und eine Aufsicht für eine weiter abgewandelte Lagerstelle für das Flüssigkeits-Förderrohr.
- Figur 12: eine schematisch Darstellung einer Luft-Übertrittsstelle zwischen dem Lumen einer Werkzeugträger-Spannstange und einem Luftkanal der Spindel; und
- Figur 13: eine ähnliche Ansicht wie Figur 10, in welcher eine nochmals abgewandelte Lagerstelle gezeigt ist.

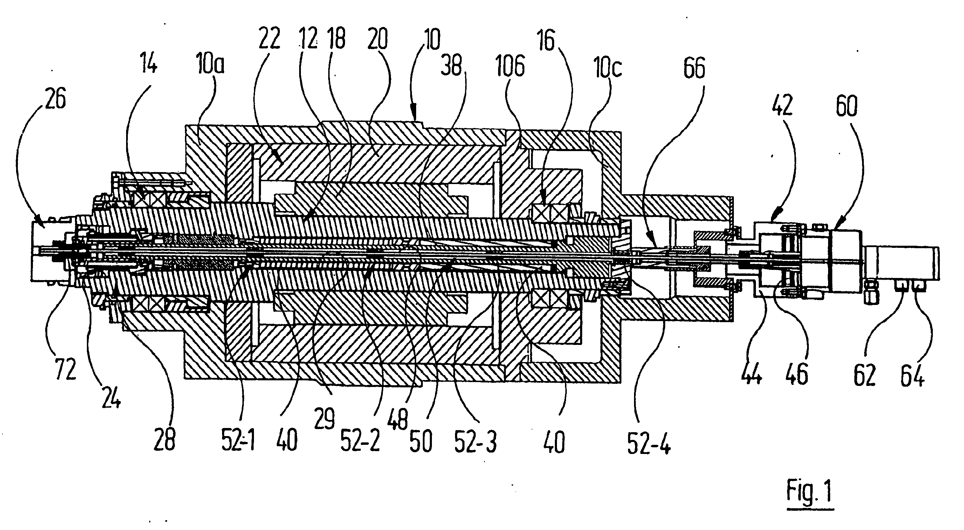

In Figur 1 ist mit 10 ein Spindelgehäuse bezeichnet, welches aus mehreren axial verschraubten Gehäusesegmenten 10a, 10b und 10c besteht.

In dem Spindelgehäuse ist eine Spindel 12 über Lager 14,16 gelagert. Die Spindel 10 trägt in ihrem mittleren Abschnitt einen Rotor 18, welcher zusammen mit einem Stator 20 einen Spindelmotor 22 bildet.

Am in Figur 1 links gelegenen Ende der Spindel 12 ist eine Zangenaufnahme 24 vorgesehen, die grob die Form eines Kegelstumpfes hat. In die Spannzangenaufnahme 24 ist der Kegel eines Werkzeugträgers 26 aufnehmbar, und zum drehschlüssigen Verblocken von Werkzeugträger 26 und Spindel 12 ist eine insgesamt mit 28 bezeichnete Spannzange vorgesehen, die in bekannter Weise federnde Spannarme 30 aufweist, die am vorderen Ende mit Nasen versehen sind, welche mit einer Halteschulter 32 einer Ausnehmung 34 zusammenarbeiten, die in der Endfläche des Werkzeugträgers 26 vorgesehen ist.

Die Spannarme 30 werden über eine Betätigungshülse 36 in ihre den Werkzeugträger 26 verriegelnde Stellung gedrückt, die auf das Ende einer hohlen gleitend in einer Spindelbohrung 29 geführten Spannstange 38 aufgeschraubt ist. Die Spannstange 38 ist durch ein Tellerfederpaket 40 in der Zeichnung nach rechts vorgespannt und kann durch einen axial außerhalb der Spindel liegenden Spannzylinder 42 in der Zeichnung nach links bewegt werden, wodurch die Nasen der Spannarme 30 von der Halteschulter 32 freikommen.

Der Spannzylinder 42 umfasst einen Zylinder 44, sowie einen in diesem beweglichen Kolben 46, der mit dem rechten Ende der Spannstange 38 verbunden ist.

In der Zeichnung nicht wiedergegebene Druckmittelkanäle dienen dazu, unter Druck stehende Hydraulikflüssigkeit dem jeweils gewünschten Arbeitsraum des Spannzylinders 42 zuzuführen.

In einer mit 48 bezeichneten Längsbohrung der Spannstange 28 verläuft zentral ein Ölrohr 50, welches in Drehrichtung feststehend ist und über Drehlager 52-1, 52-2 und 52-3 an drei axial beabstandeten Stellen radial an der Bohrung 48 der Spannstange 38 abgestützt ist.

Bei den Drehlagern 52 handelt es sich jeweils um Gleitlager mit einem mittleren Nabenabschnitt 54 und drei von diesem sternförmig nach außen laufenden Rippen 56.

Die Gleitlagerhülsen sind aus einem Kohlenstoff-Material hergestellt, das unter geringem Reibungskoeffizienten auf der Außenfläche des Ölrohres 50 läuft, welches aus Edelstahl hergestellt ist. Die Rippen 56 sitzen im Presssitz auf der Innenfläche der Bohrung 48 und das Nabenteil 54 arbeitet im Gleitspiel mit der Außenfläche des Ölrohres 50 zusammen.

Typischerweise hat man drei in Umfangsrichtung verteilte Rippen 56, deren Dicke so gewählt ist, dass sie den im Betrieb zu erwartenden radialen Belastungen des Drehlagers standhalten, wobei jedoch, soweit mit der Stabilität verträglich, darauf geachtet ist, dass die zwischen den Rippen 56 verbleibenden Nuten 58 möglichst groß sind, so dass das Drehlager insgesamt in axialer Richtung für Luft gut durchlässig ist.

Wie aus Figur 1 ersichtlich ist, ist das Ölrohr 50 in axialer Richtung über das Ende der Spindel 12 und das Ende der Spannstange 28 hinausgeführt und erstreckt sich in ein Basisteil 60, welches raumfest ist. Das Basisteil hat zwei Anschlüsse 62, 64 für Schmieröl bzw. Druckluft.

Das Ölrohr 52, der Spannzylinder 42 und das Basisteil 60 bildet zusammen mit den Drehlagern 52 eine Lanzeneinheit 66, die am in der Zeichnung links gelegenen Ende ein Schmiermittel/Luftgemisch mit niederem Schmiermittelanteil bereitstellen kann. Hierzu wird das Innere der Bohrung 48 über das Basisteil 60 mit Druckluft beaufschlagt, während das Innere des Ölrohrs 50 vom Basisteil 60 mit Schmieröl beaufschlagt ist.

In das Basisteil 60 ist ein Dosierventil integriert, welches gesteuert durch eine nicht dargestellte Steuereinheit für kurze Zeitintervalle öffnet, so dass entsprechend jeweils ein kleines Flüssigkeitsvolumen aus dem vorderen, in der Zeichnung links gelegenen Ende des Ölrohres 50 herausgeschoben wird. Dieses kleine Ölvolumen, welches beim Ablösen vom Ende des Ölrohres 50 in kleinere Bruchstücke zerteilt wird, wird dann von der Luft, die längs der Außenfläche des Ölrohres 50 heranströmt, in der Zeichnung nach links getragen.

Das so erhaltene Öl/Luft-Gemisch wird von einem Gemischkanal 68 übernommen, der in einer Kanalhülse 70 ausgebildet ist, die in einen Verbindungsstutzen 72 eingeschraubt ist, der mit dem Werkzeugträger 26 verbunden ist. Das Gemisch gelangt dann zu der in der Zeichnung links zu denkenden Werkzeugaufnahme des Werkzeugträgers und von dort in die Schmiermittelkanäle des Werkzeuges (nicht dargestellt).

Wie aus der Zeichnung ersichtlich, umgibt der Gemischkanal 68 das freie Ende des Ölrohres 50 unter kleinem radialem Spiel und weist stromab des Endes des Ölrohres 50 eine Verengung 74 auf.

Eine Lippendichtung 76 dichtet die Außenfläche des Verbindungsstutzens 72 zur Spannstange 38 hin ab.

Bei der oben beschriebenen Spindel kann sich das Ölrohr 50 in axialer Richtung bezüglich der Spannstange 38 bewegen, da die Gleit-Drehlager 52 eine Drehlagerung, und auch eine Axiallagerung bewerkstelligen.

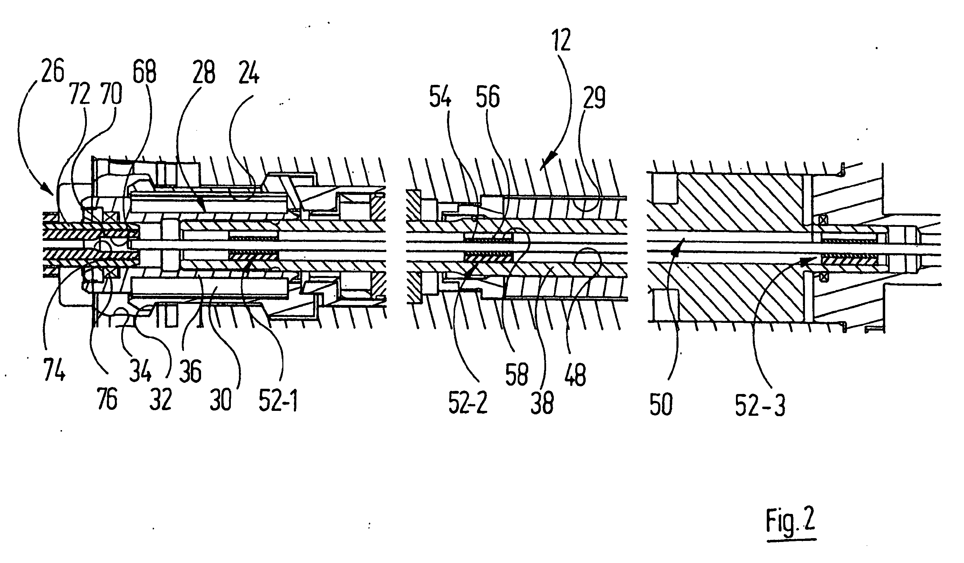

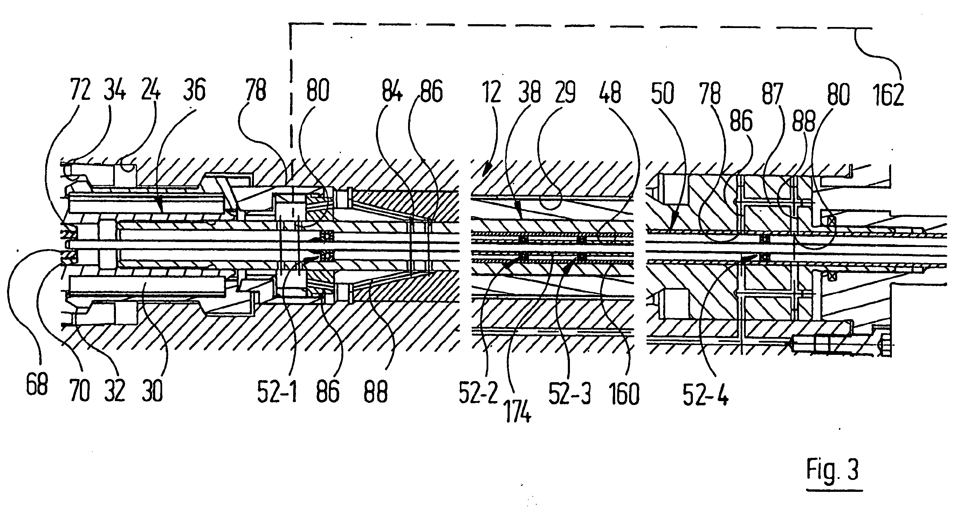

Figur 3 zeigt ein weiteres Ausführungsbeispiel, bei welchem die radiale Abstützung des Ölrohres 50 an der Spannstange 38 unter Verwendung von Kugellagern erfolgt. Komponenten der Spindel gemäß Figur 3, welche funktionsmäßig schon beschriebenen Komponenten der Spindel von Figur 1 und 2 entsprechen, sind wieder mit denselben Bezugszeichen versehen, auch wenn sie sich in Details unterscheiden, und brauchen im Einzelnen nicht nochmals detailliert beschrieben zu werden.

Beim Ausführungsbeispiel nach Figur 3 sind die inneren Laufringe der Drehlager 52 fest mit der Außenseite des Ölrohres 50 verbunden, und die äußeren Laufringe des vordersten Drehlagers 52 ist an einer Schulter der Bohrung 48 abgestützt. Die inneren Lager 52-1 usw. sind durch Distanzhülsen 174 beabstandet.

Bei dieser Variante bewegt sich somit das Ölrohr 50 zusammen mit der Spannstange 38 in axialer Richtung, wenn ein Werkzeugträger freigegeben oder festgespannt werden soll.

Bei der Spindel nach Figur 3 ist im Bereich des Drehlagers 52-1 ein Bypass vorgesehen, welcher das nur wenig luftdurchlässige Kugellager umgeht. Dieser Bypass umfasst zwei Lochkränze 78, 80 bzw. 82, 84, die in der Spannstange 38 vor bzw. hinter dem Drehlager 52 vorgesehen sind, sowie schräg zur Spindelachse verlaufende Kanäle 86, 88. Anstelle der Kanäle 86, 88 könnte man auch axiale Nuten verwenden, die nach innen offen sind und sich von den Lochkränzen 78, 80 zu den Lochkränzen 82, 84 erstrecken.

Ein ähnlicher, aber einfacherer Bypass ist für das Drehlager 52-3 vorgesehen.

Beim Ausführungsbeispiel nach Figur 3 bewegt sich das Ölrohr 50 in axialer Richtung zusammen mit der Zugstange 38.

Entsprechend ist in dem Basisteil 60 eine axiale Verschiebbarkeit des Endes des Ölrohres 50 vorgesehen. Eine Ölrohr-Verdrehsicherung umfasst zwei Rippen 92, welche auf die Außenseite des Endes des Ölrohres 50 aufgeschweißt sind und mit einer Führungsnut 94 zusammenarbeiten, die in einer Lagerkammer 96 des Basisteiles vorgesehen sind. Letztere ist über einen Kanal 98 zur Umgebung hin entlüftet.

Die Schmierölzufuhr zum Ölrohr 50 erfolgt über eine Bohrung 100 oder ein Langloch in der Wand des Ölrohres 50 sowie einen Kanal 102 des Basisteiles 60, der mit dem Schmierölanschluss 62 in Verbindung steht.

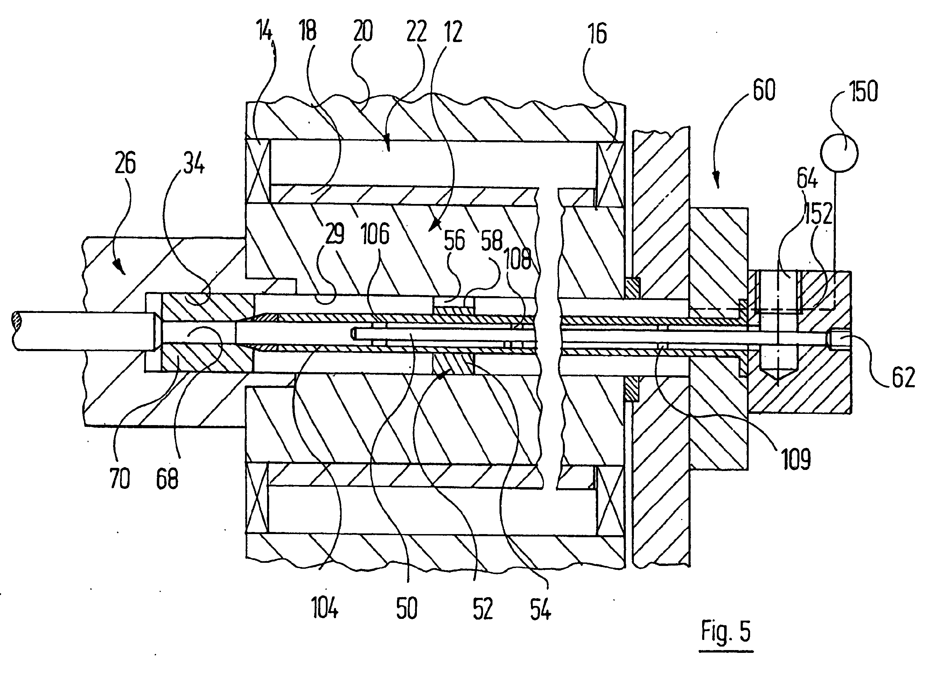

Figur 5 zeigt eine weitere Ausführungsform für eine Spindel, wobei nur die wichtigsten Teile wiedergegeben sind. Die Komponenten, die obenstehend in gleicher Funktion schon beschrieben wurden, sind wieder mit denselben Bezugszeichen versehen, auch wenn sie in Einzelheiten abgewandelt sind.

Beim Ausführungsbeispiel nach Figur 5 ist das Ölrohr 50 unter radialem Abstand von einem Luftrohr 104 umgeben. Dabei ist das Ölrohr 50 an drei Stellen über verbindungsteile 106, 108, 109 starr mit dem Luftrohr 104 verbunden, welche gleiche Geometrie aufweisen können wie die in Figur 2 gezeigten geschlitzten Gleitlagerhülsen, aber eben sowohl mit dem Ölrohr 50 als auch mit dem Luftrohr 104 starr verbunden sind. Hierdurch erhält die durch Ölrohr 50 und Luftrohr 104 gebildete Einheit eine hohe mechanische Festigkeit (Schalenbauweise).

Die durch Ölrohr 50 und Luftrohr 104 gebildete Einheit ist dann wieder über ein Drehlager 52 gegen die Spindelbohrung 29 radial abgestützt. Bei der relativ kleinen axialen Abmessung der Ölrohr/Luftrohreinheit ist es ausreichend, nur ein einziges Drehlager vorzusehen. Dieses hat im Einzelnen den gleichen Aufbau wie unter Bezugnahme auf die Figuren 1 und 2 beschrieben, ist also mit den Außenflächen seiner Rippen 56 fest mit der Spindel 12 verbunden, während die Innenfläche des Nabenabschnittes 54 im Gleitspiel auf der Außenseite des Luftrohres 104 läuft.

In Abwandlung können bei diesem Ausführungsbeispiel auch gut Wälzlager verwendet werden, da der Ringraum zwischen Spindelbohrung und Außenfläche des Luftrohres 104 nicht für den Transport eines Fluids benötigt wird.

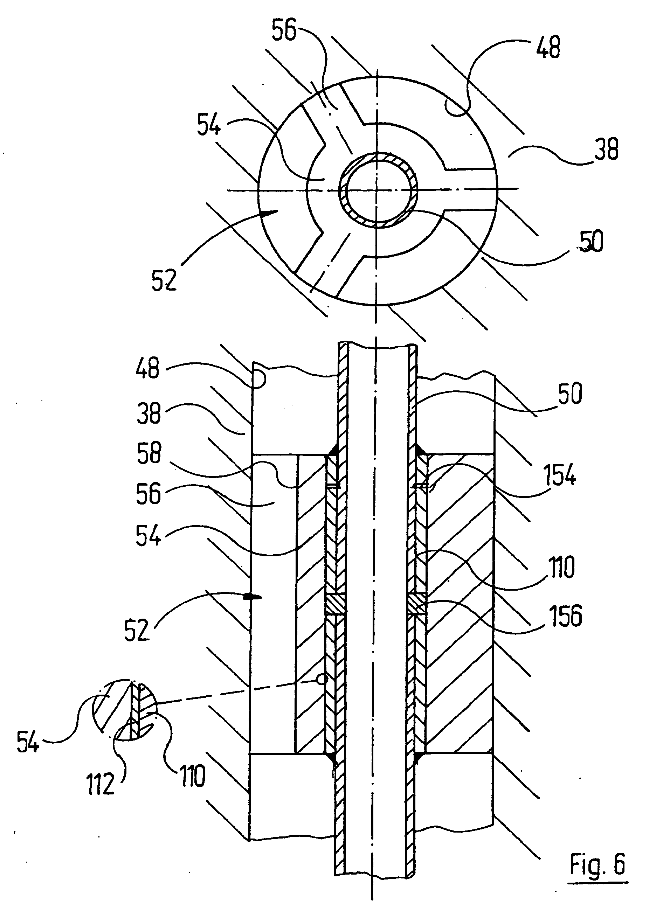

Der Aufbau eines Gleit-Drehlagers ist in Figur 6 nochmals näher dargestellt.

Man erkennt wieder den Nabenabschnitt 54 des Drehlagers 52 sowie die drei von diesem radial nach außen weglaufenden Rippen 56 mit den dazwischen liegenden weiten Nuten 58, die für ein Hindurchströmen von Luft durch das Drehlager ohne starke Drosselung sorgen.

In Figur 6 ist dargestellt, dass die innenliegende Lauffläche des Nabenabschnittes 54 nicht direkt auf der Außenfläche des Ölrohres 50 läuft. Vielmehr ist auf die Außenfläche des Ölrohres 50 eine innere Lagerhülse 110 aufgeschweißt, die auf ihrer Außenfläche eine Gleitschicht 112 trägt, die unter geringer Reibung mit der Innenfläche des Nabenabschnittes 54 zusammenarbeitet. Typische derartige Gleitschichten sind polierte Schichten aus harten Metalloxiden, Metallkarbiden oder Metallnitriden, wie sie aus der Hartmetalltechnik bekannt sind. Derartige Schichten lassen sich oft nur in speziellen Apparaturen herstellen und auf die gewünschte Oberflächengüte bearbeiten.

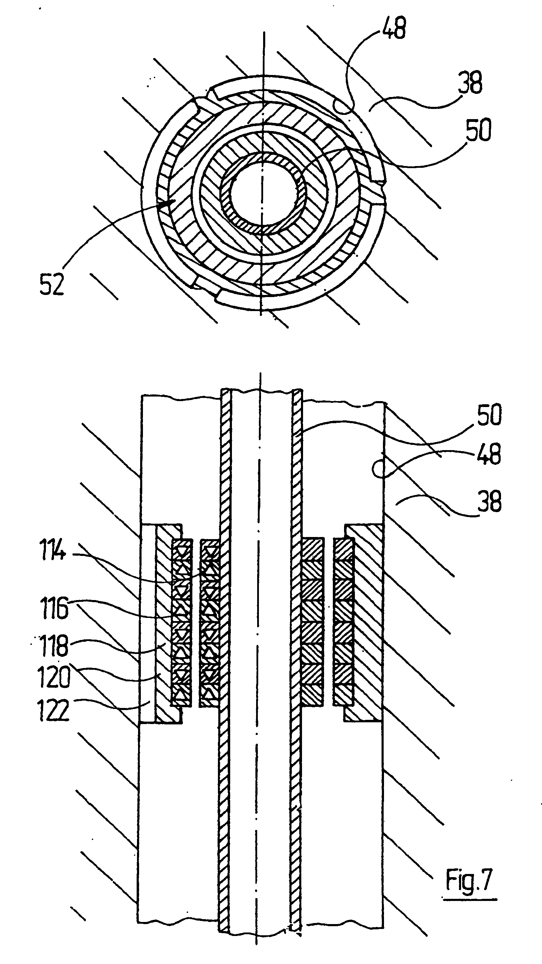

Figur 7 zeigt ein magetisches Drehlager, welches eine innere Lagerhülse 114 und eine äußere Lagerhülse 116 aufweist. Beide Lagerhülsen bestehen aus permanentmagnetischem Material, z. B. Ferritmaterial, welches in mehreren ringförmigen Segmenten magnetisiert ist. Dabei sind die Polaritäten der Magnetisierung von innerer Lagerhülse und äußerer Lagerhülse so gewählt, dass bei axialer Gegenüberstellung abstoßende Magnetkräfte zwischen den beiden Lagerhülsen 114 und 116 wirken, wodurch eine magnetische radiale Lagerung erhalten wird.

Die äußere Lagerhülse 116 ist in eine Traghülse 118 fest eingelassen, die wieder einen Nabenabschnitt 120 und drei in Umfangsrichtung gleich verteilte Rippen 122 aufweist. Die Außenflächen der Rippen 122 sind fest mit der Innenfläche einer Lagerbohrung (Spindelbohrung oder Spannstangenbohrung) verbunden, die Innenfläche des Nabenabschnittes 120 trägt fest die äußere Lagerhülse 116.

Auch das in Figur 7 gezeigte magnetische Drehlager ist dazu geeignet, das Ölrohr 50 oder eine Ölrohr/Luftrohr-Einheit radial gegen eine umlaufende Spindel abzustützen.

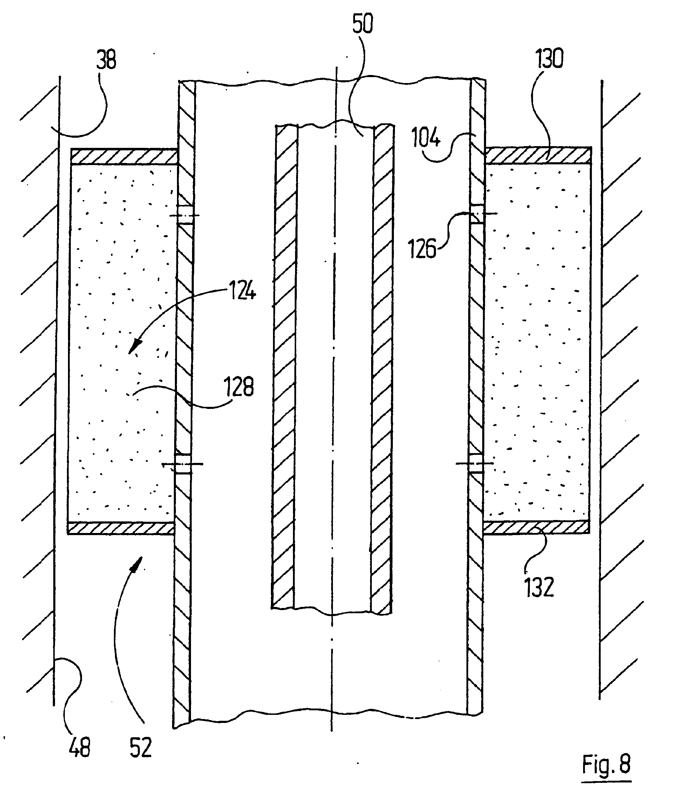

Figur 8 zeigt ein als Fluidlager ausgebildetes Drehlager mit einer Lagertrommel 124, die über Öffnungen 126 in einem Luftrohr 104 mit Druckluft beaufschlagt wird. In der Lagertrommel 124 kann ein luftdurchlässiges Füllmaterial 128 angeordnet sein.

Stirnwände 130, 132 der Lagertrommel 124 laufen unter größerem Gleitspiel vor der Innenfläche der Spindel- oder Spannstangenbohrung, so dass sich zwischen den Stirnwänden 130, 132 eine Druckluft-gefüllte Tasche bildet, die eine Luftkissenlagerung gewährleistet.

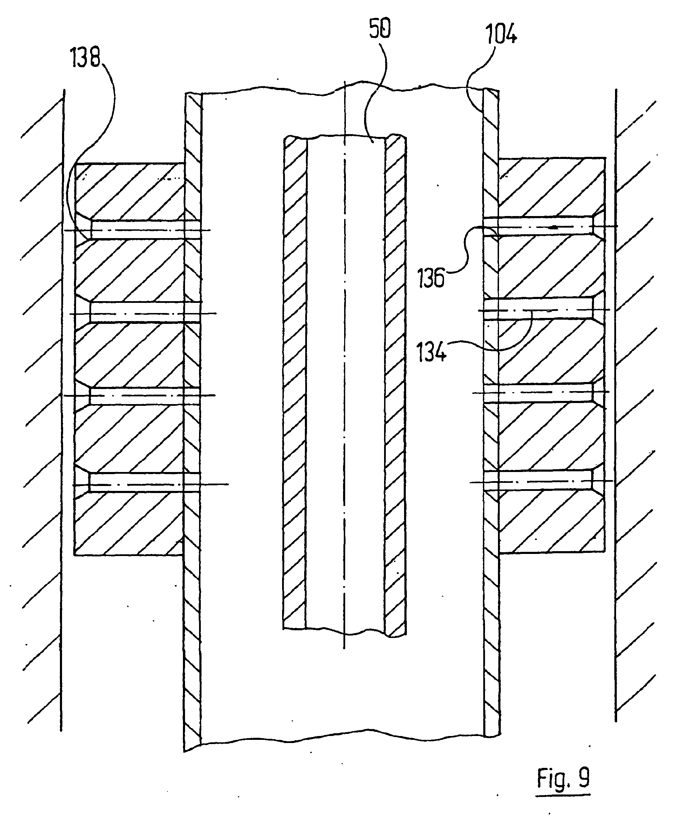

Bei dem Drehlager nach Figur 9 ist in einer massiven Lagerhülse eine Vielzahl von Düsenbohrungen 134 vorgesehen, die in radialer Richtung von Verbindungsöffnungen 136, die im Luftrohr 104 vorgesehen sind, zur Wand der Lagerbohrung 48 verlaufen. Die Düsenbohrungen 134 sind beim freien Ende aufgekelcht, wie bei 138 gezeigt.

Die Düsenbohrungen 134 sind sternförmig in Ringen angeordnet, und eine Mehrzahl derartiger Düsenkränze ist axial beabstandet in der Lagerhülse vorgesehen.

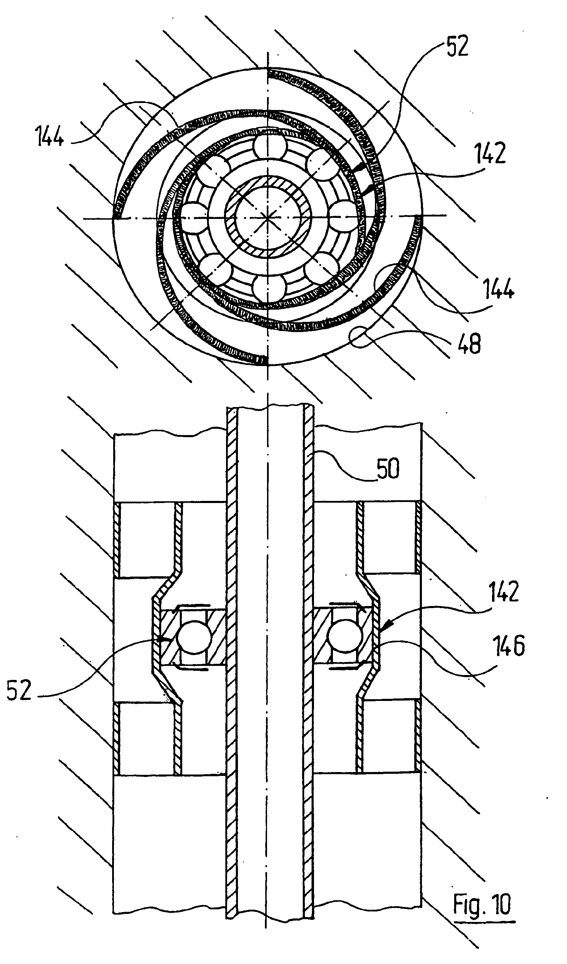

Das Drehlager nach Figur 10 ist ein Kugellager, dessen Außenring in einer Lagerhülse 142 gelagert ist. Letztere ist über spiralförmige Verbindungsarme 144 mit äußeren Montageringen 146 verbunden, die reibschlüssig mit der Lagerbohrung verbunden sind.

Die Verbindungsarme 144 können federnd sein.

Die Lagerhülse 142 hat in demjenigen axialen Bereich, in welchem das Kugellager angeordnet ist, eine Erweiterung 148 mit kegelstumpfförmigen Übergangsabschnitten.

Durch die in Figur 10 gezeigte Anordnung ist es möglich, den Durchmesser des Kugellagers anders zu wählen als den der Lagerbohrung der Spindel 12 oder der Spannstange 38. Das Lager kann somit ausschließlich im Hinblick auf seine Eigenschaften und seine Kosten ausgewählt werden. Die gesamte Lagerstelle ist wieder gut in axialer Richtung für Luft durchlässig.

Die Laufflächen der bei den oben beschriebenen verschiedenen Ausführungsbeispiele verwendeten Drehlager können zusätzlich selbst geschmiert werden. Dies kann entweder durch einen Ölnebelstrom erfolgen oder durch direkte Zufuhr von Schmiermittel zu den Laufflächen.

In Figur 5 ist gestrichelt eine Ölnebelquelle 150 dargestellt, die über einen Kanal 152 des Basisteiles 60 Ölnebel in den Ringraum zwischen Luftrohr 104 und Spindelbohrung 29 einleitet. Durch diesen Ölnebel wird die Lauffläche zwischen dem Nabenabschnitt 54 des Drehlagers 52 und der Außenfläche des Luftrohres 104 geschmiert.

Alternativ kann man eine Gleitlagerfläche, welche dem Ölrohr 50 benachbart ist, einfach dadurch schmieren, dass man in dem entsprechenden Bereich im Ölrohr 50 sehr feine Schmieröffnungen 154 vorsieht, wie in Figur 6 angedeutet, oder das Ölrohr 50 in ausgewählten axialen Abschnitten durch Gleitlagerringe 156 unterbricht, die aus etwas porösem Material, z. B. Sinterbronze, gefertigt sind und sich mit den im Ölrohr 50 geförderten Schmiermittel vollsaugen.

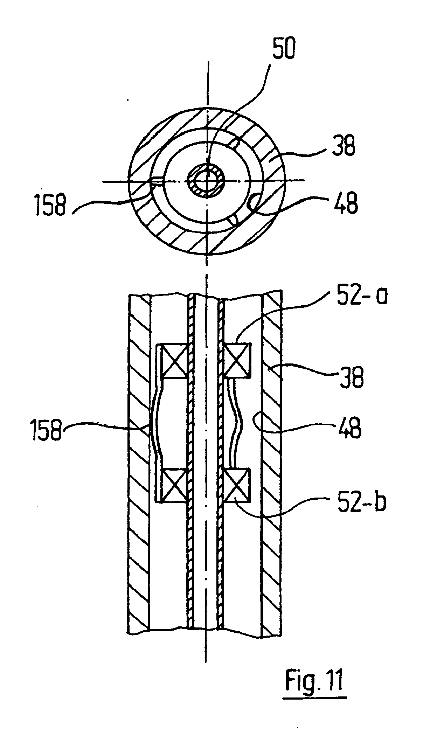

In Figur 11 ist eine weitere Lagerstelle für das Ölrohr 50 gezeigt, welche zwei unter kleinerem, dem Innendurchmesser der Lagerbohrung vergleichbaren Abstand voneinander angeordnete Kugellager 52-a, und 52-b aufweist.

Die inneren Laufringe der beiden Kugellager sind fest mit dem Ölrohr 50 verbunden, die äußeren Laufringe sind durch drei in Umfangsrichtung gleich verteilte Lamellen 158 aus Federstahl verbunden, die an die äußeren Laufringe angeschweißt sind. Die Lamellen 158 haben wie aus der Zeichnung ersichtlich konvex gekrümmte Geometrie, und der Außendurchmesser der äußeren Laufringe der Kugellager 52-a, 52-b ist kleiner als der Innendurchmeser der Lagerbohrung 48.

Die Krümmung der Lamellen 158 ist so gewählt, dass der durch die Lamellen 158 und die äußeren Laufringe der Kugellager gebildete Käfig in Presspassung in die Lagerbohrung 48 einschiebbar ist.

Vorzugsweise ist der Querschnitt der Lamellen 158 scharfkantig rechteckig wie bei einer Blattfeder, so dass die Lamellen 158 in Umfangsrichtung fest in der Lagerbohrung 48 sitzen.

Auf diese weise hat man in der in Figur 11 gezeigten Lagerstelle eine radiale Federwirkung, welche durch die gebogenen Lamellen 158 erhalten wird.

Ferner hat man die Drehlagerung, welche die Kugellager 52-a, 52-b bewirken.

Und darüber hinaus hat man eine axiale Verschiebbarkeit der Kugellager bezüglich der Lagerbohrung, welche durch die sanft geschwungene Außenfläche der Lamellen 158 unterstützt wird. Ferner erlaubt die in Figur 11 gezeigte Lagerstelle auch eine leichte Verkippung des gelagerten Abschnittes des Ölrohres 50 gegen die exakte Achse der Lagerbohrung, da die Lamellen 158 Federn sind und darüber hinaus ihre Außenflächen ballig ausgebildet sind.

Schließlich hat die Lagerstelle auch abgesehen von den Kugellagern selbst einen praktisch unveränderten DurchströmQuerschnitt für die Luft.

Beim Ausführungsbeispiel nach Figur 3 ist in der Spindelmitte noch gezeigt, dass man die Einheit aus Ölrohr 50 und Drehlagern 52 in eine dünnwandige zylindrische Patrone 160 einschließen kann. Diese ist z.B. durch Punktschweissungen mit den äußeren Laufringen der Drehlager 52 verbunden und sitzt ihrerseits Drehmoment-schlüssig in der Bohrung 48 der Spannstange 28.

Hierdurch wird die Montage der Lanzeneinheit in einer Spindel erleichtert.

Wie in Figur 3 gestrichelt angedeutet, kann man die Druckluft oder einen Teil derselben (bei nicht ausreichendem Querschnitt der Bohrung 48) über einen Bypasskanal 162 führen, der von einer vor dem ersten Drehlager 52-1 liegenden Stelle der Spannstange 28 ausgeht und bis ans hintere Ende der Spindel 12 führt, wo er wieder zurück zum Innenraum der Spannstange 28 oder einem Auslass einer Druckluft-Drehkupplung führt, die Teil des Basisteiles 60 ist.

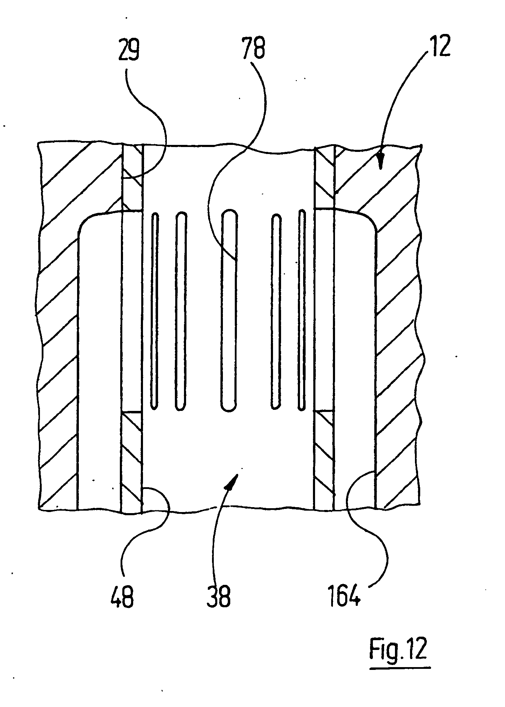

Die Figur 12 zeigt eine Luftübertrittsstelle zwischen dem Inneren der Spannstange 38 und einem in der Spindel 12 liegenden Lager-Bypasskanal, die anstelle von Lochkränzen verwendbar ist.

In die Wand der Spannstange 38 sind in einem axial ausgedehnten Bereich, dessen Länge beim betrachtetetn Ausführungsbeispiel etwa das 1 1/2-fache des Durchmesses der Bohrung 48 beträgt, Schlitze 78 eingefräst, die eine geringe Breite haben, z.B. 0,2 bis 0,5 mm, und in Umfangsrichtung gleich verteilt sind. Dies Schlitze haben auf Grund ihrer Länge trotz geringer Breite eine gute Gesamt-Durchschnittsfläche für Luft. Da das Material der Spannstange in Umfangsrichtung nur wenig vermindert ist, kann die Spannstange 38 auch im Bereich der Schlitze 78 hohe Kräfte übertragen.

Die Luft, welche über die Schlitze 78 aus der Spannstange austritt, wird über eine Ausdrehung 164 der Spindelbohrung 29, die sich bis zur nächsten Luftdurchtrittsstelle erstreckt, bis zur nächsten Luftdurchtrittsstelle geleitet und dort über eine der Anordnung von Fig. 12 horizontal spiegelbildlich entsprechende Anordnung wieder ins Innere der Spannstange zurückgeführt.

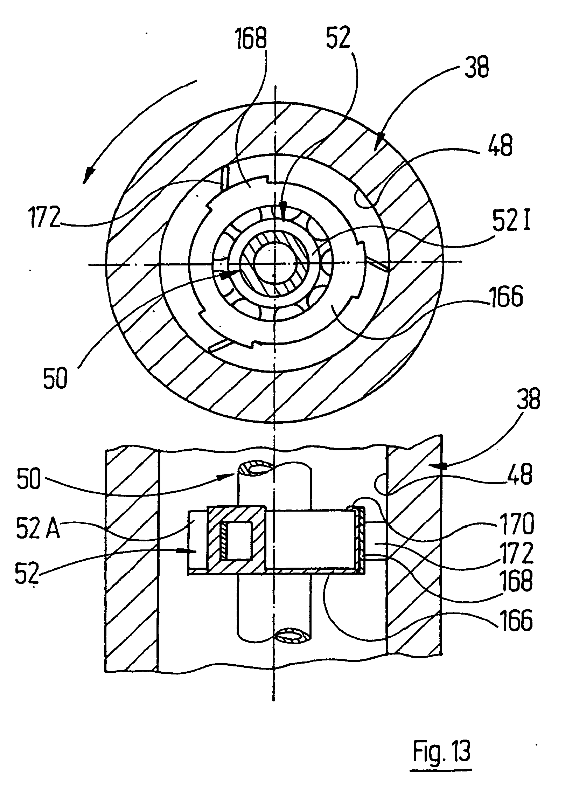

Figur 13 zeigt eine nochmals abgewandelte Lagerstelle, die der nach Figur 10 ähnelt.

Schon in vergleichbarer Funktion oben bescvhriebene Koponenten tragen wieder die selben Bezugszeichen und werden nicht mochmals detailiert beschriben.

Das durch ein Kugellager gebildete Drehlager 15 sitzt nun in einem Lagerteil 142, welches einen Ringabschnitt 166 aufweist, der den äußeren Laufring 52A des Kugellagers überdeckt, nicht aber dessen inneren Laufring 52I.

An den Ringabschnitt 166 sind drei in Umfangsrichtung verteilte axiale Haltearme 168 angeformt, welche die mantelfläche des äußeren Laufringes 52-A formschlüssig umfassen. Die Haltearme 168 tragen an ihren Enden radial nach innen verlaufende Verriegelungszungen 170, welche den äußeren Laufring 52A stirnseitig übergreifen.

Aus den breiten Haltearmen 168 sind rechteckige Traglamellen 172 ausgeschnitten und nach außen so abgewinkelt, dass sie zur Umfangsfläche der Halterarme 168 einen Winkel von 45 Grad einschließen.

Im unbelasteten Zustand liegen die radial außenliegenden axialen Kanten der Traglamellen 170 auf einem Kreis, dessen Durchmesser größer ist als der Durchmesser der Bohrung 48. In die Bohrung 48 eingesetzt sind daher die Traglamellen 170 verformt und stehen unter Vorspannung.

In Drehrichtung belastet schneiden sich ihre äußersten Kanten ein und man erhält eine gute selbstverstärkende Hemmung. Entgegen Drehrichtung kann das Tragteil 142 unter Kraftanwendung verdreht werden. Außerdem kann das Tragteil axial unter Kraftanwendung verschoben werden, wobei die äußersten Kanten der Traglamellen 170 wie die Kufen eines Schlittschuhes arbeiten.

Das gesamte Tragteil ist ein Stanzbiegeteil aus Federstahlblech. Unter Aufweitung des durch die Haltearme 168 gebildeten Käfigs kann das Tragteil 142 einfach (in Figur 13 von unten) auf das Kugellager aufgeklipst werden.

## Patentansprüche

1. Spindel für eine Bearbeitungsmaschine mit einer Lanzeneinheit, welche an ihrem freien Ende in niederer Dosierung Schmiermittel abgibt, mit einem raumfesten Basisabschnitt (60), in welchem ein Schmiermittelanschluss (62) vorgesehen ist, mit einem Flüssigkeitsrohr (50), welches mit dem Flüssigkeitsanschluss (62) kommuniziert und sich vom Basisteil (60) wegerstreckt und dessen freies Ende die Flüssigkeit in niederer Dosierung abgibt, wobei das Flüssigkeitsrohr (50) drehfest vom Basisteil (60) getragen ist, und mit einem das Flüssigkeitsrohr (50) umgebenden Gaskanal (29, 86; 88; 162; 164), **dadurch gekennzeichnet, dass** der Gaskanal (29, 86; 88; 162; 164) mit der Spindel umläuft, dass das Basisteil (60) eine Gas-Drehkupplung umfasst und dass das Flüssigkeitsrohr (50) an mindestens einem vom Basisteil (60) beabstandeten Rohrabschnitt mit einem am Gaskanal (29, 86; 88; 162; 164) abgestützten Drehlager (52) zusammenarbeitet.

2. Spindel nach Anspruch 1, **dadurch gekennzeichnet, dass** das Flüssigkeitsrohr (50) mit mehreren axial beabstandeten Drehlagern (52) zusammenarbeitet.

3. Spindel nach Anspruch 2, **dadurch gekennzeichnet, dass** entweder a) ein weiteres Drehlager bei n/i der Länge des Flüssigkeitsrohres (50) angeordnet ist, wobei n= 1, 2, 3, 4 ... ist und i=2, 3, 4 ... ist, oder b) ein weiteres Drehlager (52) bei n(1/2)ⁱ der Länge des Flüs-sigkeitsrohres (50) angeordnet ist, wobei n=1, 2, 3, 4 und i=2, 3, 4, ... ist.

4. Spindel nach Anspruch 1 oder 2, **dadurch gekennzeichnet, dass** die Außenringe der Drehlager (52) mit einer gestreckten Patrone (160) verbunden sind, welche ein äußeres Gehäuse für die Spindel bildet.

5. Spindel nach einem der Ansprüche 1 bis 4, **dadurch gekennzeichnet, dass** mindestens eines der Drehlager (52) aus der nachstehenden Gruppe ausgewählt ist: Wälzlager, Gleitlager, insbesondere Gleitlager mit einem Gleitlager-Material auf Kohlenstoffbasis, Fluidlager, Magnetlager.

6. Spindel nach Anspruch 5, **dadurch gekennzeichnet, dass** das Flüssigkeits-Zuführrohr (50) mindestens eine Gleitschicht (112) trägt, welche mit der Innenfläche einer äußeren Lagerhülse (52) zusammenarbeitet, bei der zumindest die Lauffläche ein Kohlenstoff-Gleitlager-Material aufweist.

7. Spindel nach Anspruch 6, **dadurch gekennzeichnet, dass** die Gleitschicht (112) auf der Außenseite einer inneren Lagerhülse (114) vorgesehen ist, welche von dem Flüssigkeitsrohr (50) getragen ist.

8. Spindel nach einem der Ansprüche 1 bis 7, **dadurch gekennzeichnet, dass** die Drehlager (52) axial von Gas durchströmbar sind.

9. Spindel nach einem der Ansprüche 1 bis 8, **dadurch gekennzeichnet, dass** der basisteilseitige Endabschnitt des Flüssigkeitsrohres (50) längsverschieblich aber drehfest im Basisteil (60) gehalten ist.

10. Spindel nach einem der Ansprüche 1 bis 9, **dadurch gekennzeichnet, dass** das Flüssigkeitsrohr (50) von einem Gasrohr (104) umgeben ist, welches drehfest mit dem Basisteil (60) verbunden ist und mit einem Gasanschluss (64) des Basisteils (60) in Verbindung steht, und dass die Drehlager (52) auf der Außenseite des Gasrohres (104) vorgesehen sind.

11. Spindel nach Anspruch 10, **dadurch gekennzeichnet, dass** das Gasrohr (104) über mindestens ein luftdurchlässiges Distanzteil (106, 108, 109) mit dem FlüssigkeitsZuführrohr (50) verbunden ist.

12. Spindel nach Anspruch 10 oder 11, **dadurch gekennzeichnet, dass** das basisteilseitige Ende des Gasrohres (104) längsverschieblich aber drehfest im Basisteil (60) gelagert ist.

13. Spindel nach einem der Ansprüche 1 bis 12, **dadurch gekennzeichnet, dass** die Drehlager (52) als Pendellager ausgebildet sind und ihr Außenring eine ballige, vorzugsweise sphärische Außenfläche hat oder ihr Innenring eine ballige, vorzugsweise sphärische Innenfläche aufweist.

14. Spindel nach einem der Ansprüche 1 bis 13, **dadurch gekennzeichnet, dass** mindestens eines der Drehlager (52) ein elastisch verformbares Halteteil (142; 158) aufweist.

15. Spindel nach Anspruch 14, **dadurch gekennzeichnet, dass** das Halteteil eine Mehrzahl in Umfangsrichtung verteilter elastischer Lamellen (158; 172) aufweist.

16. Spindel nach einem der Ansprüche 1 bis 15, **dadurch gekennzeichnet, dass** das Basisteil (60) eine Gas-Drehkupplung umfasst und die Spindel (12) einen mit ihr umlaufenden Gaskanal (29, 86, 88; 162; 164) umfasst, der teilweise durch eine Spindelbohrung (29) gebildet ist, in welcher die Spindel Aufnahme findet, und teilweise durch Bypass-Kanäle (86, 88) gebildet ist, welche die Drehlager (52) passierend in die Spindel (12) eingearbeitet sind, vorzugsweise in Form nach innen offener Nuten.

## Claims

1. Spindle for a machine tool with a lance unit, which lance unit at its free end discharges lubricant in low doses, comprising a fixed base portion (60), in which a lubricant connection (62) is provided, and comprising a liquid pipe (50), which communicates with the liquid connection (62) and extends away from the base part (60) and the free end of which discharges the liquid in low doses, wherein the liquid pipe (50) is carried in a rotationally fixed manner by the base part (60) and comprises a gas channel (29, 86, 88; 162, 164), **characterized in that** the gas channel (29, 86, 88; 162, 164) rotates with the spindle, that the base part (60) comprises a gas rotary coupling and that the liquid pipe (50) cooperates with a pivot bearing (52) supported on the gas channel (29, 86, 88; 162, 164) at at least one pipe portion spaced apart from the base part (60).

2. Spindle according to claim 1, **characterized in that** the liquid pipe (50) cooperates with a plurality of axially spaced-apart pivot bearings (52).

3. Spindle according to claim 2, **characterized in that** either a) a further pivot bearing is disposed at n/i of the length of the liquid pipe (50), wherein n = 1, 2, 3, 4 ... and i = 2, 3, 4 ..., or b) a further pivot bearing (52) is disposed at n(1/2)ⁱ of the length of the liquid pipe (50), wherein n = 1, 2, 3, 4 ... and i = 2, 3, 4, ....

4. Spindle according to one of claims 1 to 2, **characterized in that** the outer races of the pivot bearings (52) are connected to a straight cartridge (160) that forms an outer housing for the Spindle.

5. Spindle according to one of claims 1 to 4, **characterized in that** at least one of the pivot bearings (52) is selected from the following group: rolling-contact bearings, plain bearings, in particular plain bearings with a carbon-based plain bearing material, fluid bearings, magnetic bearings.

6. Spindle according to claim 5, **characterized in that** the liquid feed pipe (50) carries at least one sliding layer (112), which cooperates with the inner surface of an outer bearing sleeve (52), of which at least the running surface comprises a carbon plain bearing material.

7. Spindle according to claim 6, **characterized in that** the sliding layer (112) is provided on the outside of an internal bearing sleeve (114) that is carried by the liquid pipe (50).

8. Spindle according to one of claims 1 to 7, **characterized in that** gas may flow axially through the pivot bearings (52).

9. Spindle according to one of claims 1 to 8, **characterized in that** the base-part-side end portion of the liquid pipe (50) is supported in a longitudinally displaceable but rotationally fixed manner in the base part (60).

10. Spindle according to one of claims 1 to 9, **characterized in that** the liquid pipe (50) is surrounded by a gas pipe (104), which is connected in a rotationally fixed manner to the base part (60) and is in communication with a gas connection (64) of the base part (60), and that the pivot bearings (52) are provided at the outside of the gas pipe (104).

11. Spindle according to claim 10, **characterized in that** the gas pipe (104) is connected by at least one air-permeable distance part (106, 108, 109) to the liquid feed pipe (50).

12. Spindle according to claim 10 or 11, **characterized in that** the base-part-side end of the gas pipe (104) is supported in a longitudinally displaceable but rotationally fixed manner in the base part (60).

13. Spindle according to one of claims 1 to 12, **characterized in that** the pivot bearings (52) are configured as self-aligning bearings and their outer race has a crowned, preferably spherical outer surface or their inner race has a crowned, preferably spherical inner surface.

14. Spindle according to one of claims 1 to 13, **characterized in that** at least one of the pivot bearings (52) comprises an elastically deformable retaining part (142; 158).

15. Spindle according to claim 14, **characterized in that** the retaining part comprises a plurality of resilient lamellae (158; 172) that are distributed in peripheral direction.

16. Spindle according to one of claims 1 to 15, **characterized in that** the base part (60) comprises a gas rotary coupling and the spindle (12) comprises a gas channel (29, 86, 88; 162, 164) that rotates with the spindle (12) said gas channel is formed in part by a spindle bore (29), in which the spindle holder is accommodated, and in part by bypass channels (86, 88), preferably in the form of inwardly open grooves, which are worked into the spindle (12) so as to bypass the pivot bearings (52).

## Revendications

1. Broche destinée à une machine d'usinage et équipée d'un ensemble lance qui délivre à son extrémité libre du lubrifiant à faible dosage, avec une partie de base stabilisée (60) dans laquelle est prévu un branchement de lubrifiant (62), avec un tube de liquide (50) qui communique avec le branchement de liquide (62), s'étend en éloignement de la partie de base (60) et dont l'extrémité libre délivre le liquide à faible dosage, le tube de liquide (50) étant porté par la partie de base (60) en étant bloqué en rotation, et avec un canal de gaz (29, 86 ; 88 ; 162 ; 164) entourant le tube de liquide (50), **caractérisée en ce que** le canal de gaz (29, 86 ; 88 ; 162 ; 164) tourne avec la broche, **en ce que** la partie de base (60) comprend un accouplement rotatif pour gaz et **en ce que** le tube de liquide (50) coopère, au niveau d'au moins un tronçon de tube distant de la partie de base (60), avec un palier de rotation (52) appuyé contre le canal de gaz (29, 86 ; 88 ; 162 ; 164).

2. Broche selon la revendication 1, **caractérisée en ce que** le tube de liquide (50) coopère avec plusieurs paliers de rotation (52) axialement distants.

3. Broche selon la revendication 2, **caractérisée en ce que**, soit a) un palier de rotation supplémentaire est disposé à n/i de la longueur du tube de liquide (50), où n = 1, 2, 3, 4 ... et i = 2, 3, 4 ..., soit b) un palier de rotation supplémentaire (52) est disposé à n(1/2)ⁱ de la longueur du tube de liquide (50), où n = 1, 2, 3, 4 ... et i = 2, 3, 4 ....

4. Broche selon la revendication 1 ou 2, **caractérisée en ce que** les bagues extérieures des paliers de rotation (52) sont reliées à une cartouche allongée (160) qui forme un boîtier extérieur pour la broche.

5. Broche selon l'une des revendications 1 à 4, **caractérisée en ce qu'**au moins un des paliers de rotation (52) est sélectionné parmi le groupe suivant : paliers à roulement, paliers lisses, en particulier paliers lisses avec un matériau de palier lisse à base de carbone, paliers fluides, paliers magnétiques.

6. Broche selon la revendication 5, **caractérisée en ce que** le tube d'apport de liquide (50) porte au moins une couche antifriction (112) qui coopère avec la surface intérieure d'un coussinet de palier extérieur (52) dont au moins la surface de contact présente un matériau de palier lisse à base de carbone.

7. Broche selon la revendication 6, **caractérisée en ce que** la couche antifriction (112) est prévue sur le côté intérieur d'un coussinet de palier intérieur (114) qui est porté par le tube de liquide (50).

8. Broche selon l'une des revendications 1 à 7, **caractérisée en ce que** du gaz peut s'écouler axialement à travers les paliers de rotation (52).

9. Broche selon l'une des revendications 1 à 8, **caractérisée en ce que** la partie terminale du tube de liquide (50) qui est située du côté de la partie de base est maintenue dans la partie de base (60) à déplacement longitudinal mais en étant bloquée en rotation.

10. Broche selon l'une des revendications 1 à 9, **caractérisée en ce que** le tube de liquide (50) est entouré par un tube de gaz (104) qui est relié à la partie de base (60) en étant bloqué en rotation et qui communique avec un branchement de gaz (64) de la partie de base (60), et **en ce que** les paliers de rotation (52) sont prévus sur le côté extérieur du tube de gaz (104).

11. Broche selon la revendication 10, **caractérisée en ce que** le tube de gaz (104) est relié au tube d'apport de liquide (50) par l'intermédiaire d'au moins un élément d'écartement (106, 108, 109) perméable à l'air.

12. Broche selon la revendication 10 ou 11, **caractérisée en ce que** l'extrémité du tube de gaz (104) qui est située du côté de la partie de base est montée dans la partie de base (60) à déplacement longitudinal mais en étant bloquée en rotation.

13. Broche selon l'une des revendications 1 à 12, **caractérisée en ce que** les paliers de rotation (52) sont réalisés sous la forme de paliers articulés et leur bague extérieure possède une surface extérieure bombée, de préférence sphérique, ou leur bague intérieure possède une surface intérieure bombée, de préférence sphérique.

14. Broche selon l'une des revendications 1 à 13, **caractérisée en ce qu'**au moins un des paliers de rotation (52) présente une partie de maintien (142 ; 158) élastiquement déformable.

15. Broche selon la revendication 14, **caractérisée en ce que** la partie de maintien présente une pluralité de lamelles élastiques (158 ; 172) réparties en direction périphérique.

16. Broche selon l'une des revendications 1 à 15, **caractérisée en ce que** la partie de base (60) comprend un accouplement rotatif pour gaz et la broche (12) comprend un canal de gaz (29, 86, 88 ; 162 ; 164) tournant avec elle, qui est formé pour partie par un alésage pour broche (29) dans lequel est reçue la broche, et qui est formé pour partie par des canaux de dérivation (86, 88) qui sont ménagés dans la broche, de préférence sous la forme de rainures ouvertes vers l'intérieur, en contournant les paliers de rotation (52).
